# EUROPÄISCHE PATENTANMELDUNG

(11) **EP 0 931 616 A2**
(43) Veröffentlichungstag der Anmeldung: **28.07.1999**
(21) Anmeldenummer: 98119199.2
(22) Anmeldetag: 12.10.1998
(51) Int. Cl.: B23D 61/18

(54) **Sägeseil mit Sägeperle mit differentiertem Aussenumfang**

(30) Priorität: 27.01.1998 DE 19802938
(71) Anmelder: Büdiam Diamantwerkzeuge R. u. N. Büttner GmbH, 35713 Eschenburg (DE)
(72) Erfinder: Weber, Ludger, Dr. Dipl.-Ing., 35713 Eschenburg (DE)
(74) Vertreter: Missling, Arne, Dipl.-Ing.

(57) **Zusammenfassung**

Die Erfindung bezieht sich auf ein Sägeseil, insbesondere für eine Seilsäge, mit mindestens einer, in ein festes Bindemittel eingebundene Hartkörper aufweisenden Sägeperle mit einer in etwa zylindrischen äußeren Form.

Um bei einem neu eingesetzten Sägeseil eine hohe Anfangsschnittleistung erreichen zu können, schlägt die Erfindung vor, daß die Sägeperle einen Bereich (5) eines größeren Außenumfangs und einen Bereich (7) eines kleineren Außenumfangs aufweist.

## Beschreibung

Die Erfindung betrifft ein Sägeseil, insbesondere für eine Seilsäge, mit mindestens einer, in ein festes Bindemittel eingebundene Hartkörper aufweisende Sägeperle mit einer in etwa zylindrischen äußeren Form.

Ein derartiges Sägeseil ist für eine Seilsäge bekannt. Eine solche Seilsäge weist eine Antriebseinheit auf, die das über mehrere Umlenkscheiben geführte Sägeseil antreibt. Dabei besteht das Sägeseil als solches aus einem Stahlseil, wobei in bestimmten Abständen auf dem Stahlseil jeweils aus einem Sinterkörper bestehende, in etwa kreiszylindrische Sägeperlen angeordnet sind. Die Sinterkörper weisen in ein Bindemittel eingebundene Hartkörper auf, die beim Herstellungsvorgang der Sägeperlen vollständig in dem Bindemittel angeordnet sind, so daß die Hartkörper beim anfänglichen Schneidvorgang, d. h. zu Beginn der Einsatzzeit des Sägeseils, nur wenig zur Schneidleistung beitragen. Erst wenn die Hartkörper - durch Abtrag des Bindemittels beim Sägevorgang - teilweise aus dem Bindemittel freigelegt sind, können sie ihren vollen Beitrag zur Schneidleistung erbringen. Dieser Zustand wird mit einem neu eingesetzten Sägeseil - abhängig von der täglichen Einsatzdauer - nach ca. drei Tagen erreicht. Dann steht die maximale Sägeleistung zur Verfügung, wohingegen die Sägeleistung bei Einsatzbeginn in etwa 30 % der maximalen Sägeleistung beträgt.

Um hier Abhilfe zu schaffen, ist es Aufgabe der vorliegenden Erfindung, ein Sägeseil mit Sägeperlen vorzuschlagen, welches bereits nach kürzester Einsatzzeit seine maximale Schnittleistung, d. h. seine Soll-Schnittleistung, erreicht.

Diese Aufgabe wird bei einem Sägeseil der eingangs genannten Art dadurch gelöst, daß die Sägeperle einen Bereich eines größeren Außenumfangs und einen Bereich eines kleineren Außenumfangs aufweist. Auf diese Weise wird die Sägeleistung zunächst vollständig von einem Bereich der Sägeperle erbracht, der einen größeren Außenumfang und eine verminderte aktive Schleifbelagfläche aufweist und damit von dem Sägeseil besonders weit hervorragt. Dadurch wird das Bindemittel in diesem Bereich sehr schnell abgetragen, so daß die Hartkörper hier entsprechend schnell zum Einsatz gelangen. Hierdurch ist eine Anfangsschnittleistung zu erreichen, die bei ca. 90 % der maximalen Schnittleistung liegt. Außerdem steht nach nur kurzer Einsatzdauer bereits die maximale Schnittleistung, d. h. die angestrebte Soll-Schnittleistung, zur Verfügung. Somit kann die Seilsäge nahezu durchgängig auch nach einem Austausch des Sägeseils mit voller Schnittleistung betrieben werden. Die maximale Schnittleistung steht dann zur Verfügung, wenn die Hartkörper mit ca. einem Drittel ihrer Länge aus dem Bindemittel hervorstehen.

Besonders vorteilhaft ist es, wenn der Bereich eines größeren Außenumfangs der Sägeperle in einer vorgesehenen Laufrichtung des Sägeseils vor dem Bereich eines kleineren Außenumfangs angeordnet ist. Somit ist sichergestellt, daß zuerst der Bereich eines größeren Außenumfangs in Eingriff mit einem zu sägenden Werkstück kommt und bis zum Außenumfang des übrigen Bereichs abgenutzt und damit eine maximale Materialausnutzung der Sägeperle gewährleistet wird.

Gemäß einer anderen vorteilhaften Weiterbildung der Erfindung weist der Bereich eines größeren Außenumfangs der Sägeperle in der Laufrichtung des Sägeseils eine geringere Erstreckung auf als der Bereich eines kleineren Außenumfangs. Dadurch wird das Bindemittel in dem vorstehenden Bereich der Sägeperle besonders schnell abgetragen und die Hartkörper entsprechend schnell freigelegt. Die Einsatzzeit eines neuen Sägeseils, nach welcher die maximale Schnittleistung erreicht wird, läßt sich so weiter verringern.

Besonders einfach fertigen läßt sich eine erfindungsgemäße Sägeperle, wenn der Bereich eines kleineren Außenumfangs der Sägeperle mit einer Stufe in den Bereich eines größeren Außenumfangs übergeht. Der Verlauf der Schnittleistung bei zunehmendem Abtrag des Bindemittels ist vorteilhaft gleichmäßig, wenn die Stufe eine Schrägung oder eine Rundung aufweist.

Besonders gleichmäßig und stetig ist der Schnittleistungsverlauf, wenn der Bereich eines kleineren Außenumfangs der Sägeperle einen Konus bildend vorzugsweise kontinuierlich in den Bereich eines größeren Außenumfangs übergeht.

Gemäß einer anderen vorteilhaften Weiterbildung der Erfindung weist die Sägeperle in der vorgesehenen Laufrichtung hinter dem Bereich eines kleineren Außenumfangs einen weiteren Bereich eines größeren Außenumfangs auf. Dadurch wird eine Schrägstellung der Sägeperle in bezug auf ein zu sägendes Werkstück zuverlässig vermieden und somit eine gleichmäßige Abnutzung der Sägeperle sichergestellt. Vorzugsweise schließt sich an den weiteren Bereich eines größeren Außenumfangs ein weiterer Bereich eines kleineren Außenumfangs an. Die vorbeschriebenen Bereiche müssen dabei nicht fest miteinander verbunden sein, sondern sie können auch unmittelbar aneinander anschließend auf dem Sägeseil befestigt sein, wobei erhabene Bereiche, d. h. Bereiche mit einem größeren Außenumfang, sich mit niedrigeren Bereichen, d. h. Bereichen mit einem kleineren Außenumfang, abwechseln können. Bei mehreren erhabenen Bereichen übernimmt immer der nächstfolgende Bereich dann die volle Schnittleistung, wenn der vorhergehende Bereich entsprechend abgetragen ist. Hierdurch wird eine bereits zu Beginn sehr hohe Schnittleistung erreicht, die im wesentlichen über dem Abtrag der Sägeperlen gleichbleibend ist.

Die oben geschilderte Aufgabe wird bei einem Sägeseil der eingangs genannten Art auch dadurch gelöst, daß das Sägeseil mindestens zwei Sägeperlen unterschiedlichen Außenumfangs aufweist und daß auf dem Sägeseil periodisch abwechselnd Sägeperlen größeren und kleineren Außenumfangs angeordnet sind, wobei in einer vorgesehenen Laufrichtung des Sägeseils innerhalb einer Periode jeweils eine Sägeperle eines größeren Außenumfangs vor einer Sägeperle eines kleineren Außenumfangs angeordnet ist. Eine Periode besteht demzufolge aus mindestens einer Sägeperle mit einem größeren Außenumfang und einer Sägeperle mit einem kleineren Außenumfang, wobei die erstgenannte Sägeperle in einer vorgesehenen Laufrichtung des Sägeseils vorne liegt. Zwischen diesen Sägeperlen können weitere Sägeperlen angeordnet sein, deren Außenumfang eine Größe aufweist, die zwischen den Außenumfängen der vorgenannten Sägeperlen liegt. Mit einer solchen Anordnung entsprechender Sägeperlen auf einem Sägeseil wird erreicht, daß das Bindemittel der Sägeperlen mit dem größten Außenumfang zuerst und nach kurzer Zeit abgetragen wird und diese Sägeperlen sehr schnell ihre volle Schnittleistung erbringen. Bei einer weiteren Abnutzung werden dann die nächstkleineren Sägeperlen jeweils mit in den Schneidprozeß einbezogen, bis auch sie ihre volle Schnittleistung erbringen. Dieser Ablauf setzt sich solange fort, bis die kleinsten Sägeperlen und mit diesen auch alle anderen Sägeperlen vollständig abgenutzt sind. Auf diese Weise wird über die gesamte Einsatzdauer des Sägeseils, beginnend unmittelbar nach der Inbetriebnahme, eine nahezu gleichbleibend hohe Schnittleistung des Sägeseils erzielt.

Man könnte sich vorstellen, die Sägeperlen z. B. mit einem drei- oder viereckigen Querschnitt zu versehen. Die Schneidleistung eines erfindungsgemäßen Sägeseils ist jedoch besonders gleichmäßig und hoch und zudem unabhängig von einer möglichen Verdrehung des Sägeseils um seine Längsachse, wenn die Sägeperlen kreiszylindrisch sind.

Ein erfindungsgemäßes Sägeseil läßt sich besonders einfach und kostengünstig herstellen, wenn gemäß einer anderen vorteilhaften Weiterbildung der Erfindung die Sägeperlen unmittelbar auf das Sägeseil aufgebracht sind. Die Art der Befestigung der Sägeperlen kann in unterschiedlicher Art und Weise durchgeführt werden, z. B. durch aufsintern.

Die Sägeperlen lassen sich unabhängig von dem Sägeseil vorfertigen, wenn zwischen den Sägeperlen und dem Sägeseil jeweils ein eine zentrische Ausnehmung aufweisender Tragkörper angeordnet ist. Auf diese Weise können die Sägeperlen, z. B. durch Sintern, auf den Tragkörper aufgebracht sein, woraufhin der Tragkörper - zu einem späteren Zeitpunkt und gegebenenfalls an einem anderen Ort - auf das Sägeseil aufgeschoben und darauf befestigt wird. Für einen festen Halt des Tragkörpers auf dem Sägeseil ist es von besonderem Vorteil, wenn die Ausnehmung an ihrer Oberfläche eine Riffelung, Rasterung oder Zahnung aufweist.

Insbesondere vor Korrosion und mechanischer Beschädigung besteht vorteilhaft ein guter Schutz, wenn das Sägeseil und/oder die Sägeperlen mit einem Überzug versehen sind. Sind die Sägeperlen jeweils auf einen Tragkörper aufgebracht, dann wird der Halt der Tragkörper auf dem Sägeseil vorteilhaft weiter verbessert, wenn zumindest ein Teil des Überzugs zwischen Tragkörper und Sägeseil angeordnet ist. Vorzugsweise weist der Überzug einen Kunststoff auf, wodurch er sich, z. B. in einem Spritzgießverfahren, besonders leicht auf das Sägeseil und/oder die Sägeperlen aufbringen läßt und einen sehr guten Schutz bietet.

Gemäß einer anderen vorteilhaften Weiterbildung der Erfindung ist das Bindemittel der Sägeperlen metallisch. In ein solches Bindemittel lassen sich die für eine hohe Schneidleistung erforderlichen Hartkörper besonders gut einbinden.

Von besonderem Vorteil ist es, wenn die Hartkörper der Sägeperlen Diamantkörner sind, wobei deren Große beispielsweise 0,5 mm betragen kann. Die Diamantkörner ermöglichen eine besonders hohe Schnittleistung der Seilsäge.

Wenn das Sägeseil gemäß einer anderen vorteilhaften Weiterbildung der Erfindung ein Stahlseil ist, das z. B. aus einer größeren Anzahl miteinander verdrillter Drähte bestehen kann, dann läßt es sich einfach und kostengünstig herstellen und gewährleistet eine hohe Haltbarkeit.

Die Erfindung läßt zahlreiche Ausführungsformen zu. Mehrere davon werden nachfolgend anhand der beigefügten Zeichnung beschrieben. In dieser zeigt:
- Fig. 1: einen Abschnitt eines erfindungsgemäßen Sägeseils mit Sägeperlen in geschnittener Darstellung,
- Fig. 2a - 3d: verschiedene erfindungsgemäße Sägeperlen in Seitenansicht,
- Fig. 4, 5: jeweils einen Abschnitt eines weiteren erfindungsgemäßen Sägeseils mit einer Sägeperle in geschnittener Darstellung,
- Fig. 6: einen Abschnitt eines weiteren erfindungsgemäßen Sägeseils mit Sägeperlen in Seitenansicht
und
- Fig. 7: ein Schnittleistung-Zeit-Diagramm.

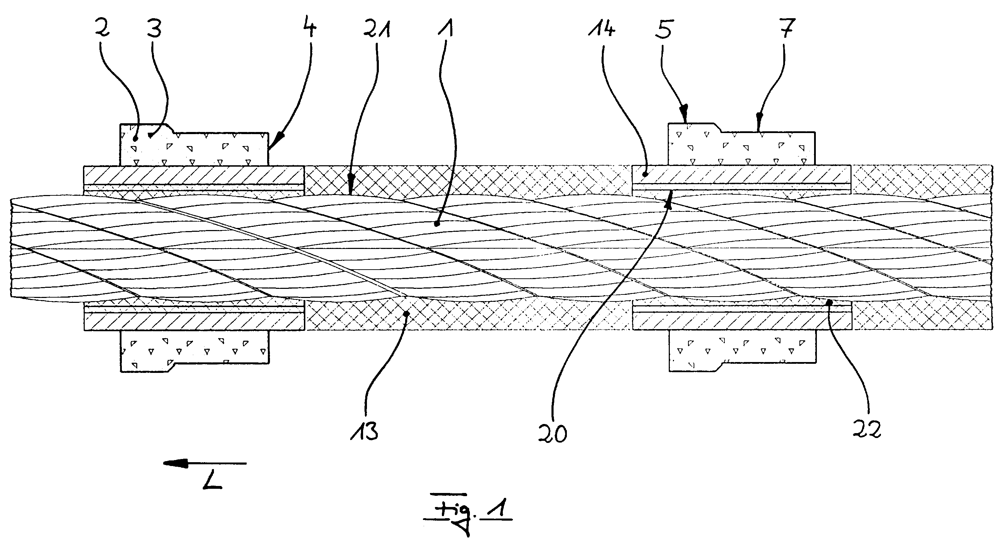

In Figur 1 ist ein Abschnitt eines aus einer Vielzahl miteinander verdrillter Einzeldrähte bestehenden Stahlseils 1 für eine hier nicht dargestellte Seilsäge gezeigt. Das Sägeseil 1 ist mit voneinander beabstandeten, kreiszylindrischen Sägeperlen 4 versehen, die Hartkörper 3 in Form von Diamantkörnern aufweisen. Die Diamantkörner besitzen eine Größe von z. B. 0,5 mm und sind in ein Bindemittel 2 - eine metallische Bindungsmatrix - eingebunden. Die Sägeperlen 4 sind jeweils auf einen Tragkörper 14 aus einer Metallhülse, die an ihrer inneren Oberfläche 20 mit einer Riffelung versehen ist, aufgebracht; dieses kann beispielsweise durch Aufsintern des metallischen Bindemittels 2 mit den Diamantkörnern 3 auf die Metallhülse 14 geschehen, wobei die Sägeperlen 4 auf die Hülse 14 aufgeschrumpft werden.

Durch die Riffelung an der inneren Oberfläche 20 der Metallhülsen 14 sind die Sägeperlen 4 sicher auf dem Sägeseil 1 gehalten. Zusätzlich ist die äußere Oberfläche 21 des Sägeseils 1 mit einem Überzug 13, der in der dargestellten Ausführungsform aus einer Kunststoffmischung besteht, die z. B. auf das Sägeseil 1 aufgespritzt sein kann, versehen, wobei die Kunststoffmischung auch in Zwischenräume 22 zwischen den Tragkörpern 14 und dem Sägeseil 1 eindringt und so den Halt der Tragkörper 14 mit den Sägeperlen 4 auf dem Sägeseil 1 herstellt.

Die Sägeperlen 4 weisen jeweils einen Bereich 5 eines größeren Außenumfangs und einen Bereich 7 eines kleineren Außenumfangs auf. Die Bereiche 5 eines größeren Außenumfangs stehen weiter von dem Sägeseil 1 hervor als die Bereiche 7 eines kleineren Außenumfangs. Es ist zu erkennen, daß der Bereich 5 eines größeren Außenumfangs der Sägeperlen 4 in einer vorgesehenen Laufrichtung L des Sägeseils 1 jeweils vor dem Bereich 7 eines kleineren Außenumfangs angeordnet ist. Wird das Sägeseil 1 beim Starten eines Sägevorgangs in Bewegung gesetzt kommen somit zuerst die Bereiche 5 eines größeren Außenumfangs zum Einsatz. Da diese Bereiche eine nur geringe Längserstreckung besitzen, die kleiner ist als die Längserstreckung der Bereiche 7 eines kleineren Außenumfangs, werden hier die Diamantkörner 3 sehr schnell freigelegt und können aktiv zur Sägeleistung beitragen. Erst allmählich, wenn sich die Bereiche 5 eines größeren Außenumfangs abzunutzen beginnen, kommen auch die Diamantkörner 3 in den Bereichen 7 eines kleineren Außenumfangs zum Einsatz und tragen aktiv zur Sägeleistung bei. Damit wird eine hohe Anfangssägeleistung und ein konstanter Verlauf der Sägeleistung über die Einsatzzeit des Sägeseils 1 erreicht.

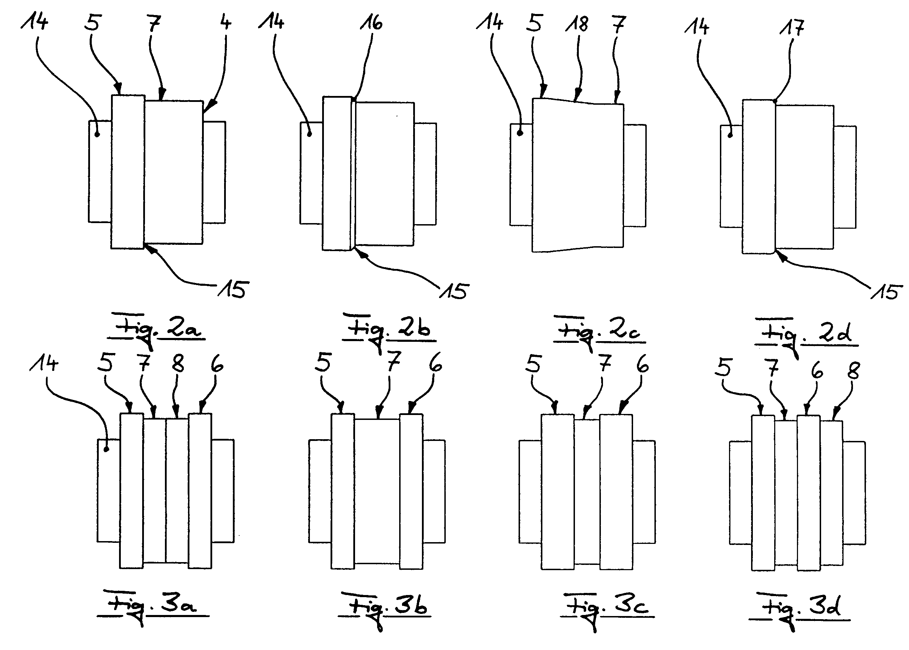

Figuren 2a bis 2d zeigen jeweils eine Seitenansicht einer auf einen hülsenförmigen Tragkörper 14 aufgebrachten Sägeperle 4. In diesen wie auch in den anderen Figuren sind sich entsprechende Bauelemente mit gleichen Bezugszeichen versehen. Bei den Ausführungsformen nach Figuren 2a, 2b und 2d geht jeweils ein Bereich 7 eines kleineren Außenumfangs der Sägeperle 4 mit einer Stufe 15 in einen Bereich 5 eines größeren Außenumfangs über. In Figur 2a ist die Stufe eckig und rechtwinklig ausgebildet, wohingegen in Figur 2b eine Stufe 15 mit einer Schrägung 16 und in Figur 2d eine Stufe 15 mit einer Rundung 17 versehen ist. Die Schrägung 16 und die Rundung 17 erhöhen die Festigkeit der jeweiligen Sägeperle 4 und verhindern einen abrupten Übergang zwischen dem Bereich 5 eines größeren Außenumfangs der Sägeperlen 4 und dem Bereich 7 eines kleineren Außenumfangs. Besonders günstig ist dabei eine Ausführungsform einer Sägeperle 4 nach Figur 2c, wobei ein Bereich 7 eines kleineren Außenumfangs der Sägeperle 4 einen Konus 18 bildend kontinuierlich in einen Bereich 5 eines größeren Außenumfangs übergeht.

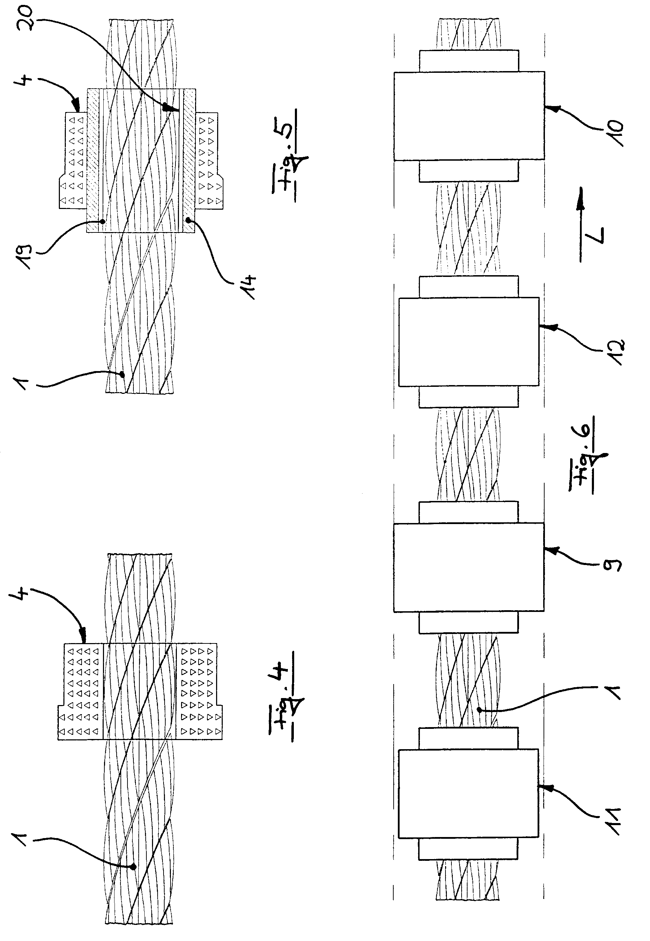

Verschiedene Sägeperlen mit jeweils zwei Bereichen eines größeren Außenumfangs sind in Figuren 3a bis 3d dargestellt. Nach Figur 3a grenzen dabei zwei Bereiche 5, 6 eines größeren Außenumfangs einer Sägeperle 4 zwei Bereiche 7, 8 eines kleineren Außenumfangs ein. Die verschiedenen Bereiche können z. B. verschiedene Hartkörper und/oder verschiedene Bindemittel aufweisen, um den Sägeleistungsverlauf zu optimieren. Nach Figur 3b sind die verschiedenen Bereiche eines kleineren Außenumfangs gemäß Figur 3a zu einem einzigen Bereich 7 zusammengefaßt, wobei die Längserstreckung dieses Bereichs in etwa der Summe der Längserstreckungen zweier seitlich angrenzend angeordneter Bereiche 5, 6 eines größeren Außenumfangs entspricht. Hingegen weist ein Bereich 7 eines kleineren Außenumfangs einer ähnlichen Sägeperle 4 nach Figur 3c eine geringere Längserstreckung auf als die Summe der Längserstreckungen von Bereichen 5, 6 eines größeren Außenumfangs. Eine Sägeperle nach Figur 3d weist abwechselnd einen Bereich 5, 6 eines größeren Außenumfangs und einen Bereich 7, 8 eines kleineren Außenumfangs auf, wobei die Längserstreckung der Bereiche 5 - 8 in etwa gleich groß ist. Die Wahl der Außenkontur der Sägerperlen ist abhängig von dem verwendeten Bindemittel, den eingesetzten Hartkörpern, der gewünschten Anfangssägeleistung und von dem Werkstoff des zu sägenden Werkstücks.

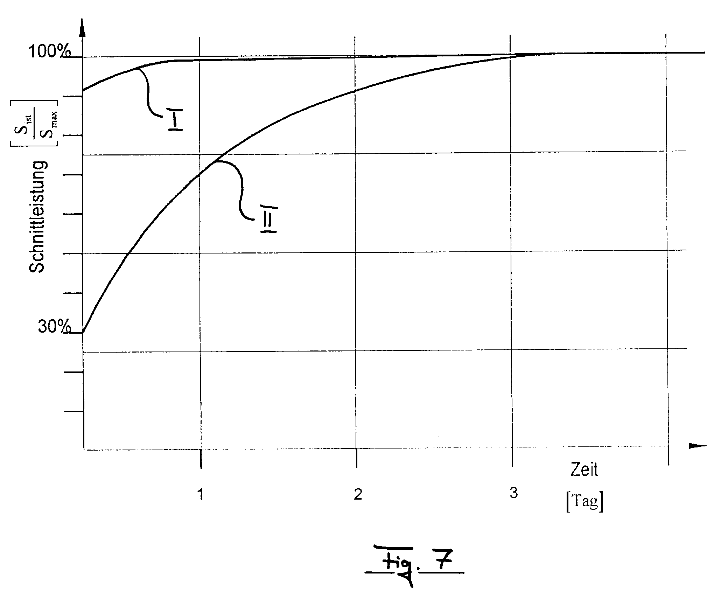

Eine Sägeperle 4, die - z. B. in einem Sintervorgang - unmittelbar auf ein Sägeseil 1 aufgebracht ist, zeigt Figur 4. Insbesondere bei einer geriffelten Oberflächenstruktur des Sägeseils 1, wie sie in diesem Ausführungsbeispiel dadurch gegeben ist, daß das Sägeseil 1 aus einer Vielzahl miteinander verdrillter Einzeldrähte besteht, ist ein sicherer Halt der Sägeperle 4 auf dem Sägeseil 1 gewährleistet.

Bei einer Ausführungsform nach Figur 5 ist hingegen eine Sägeperle 4 auf einen hohlzylindrischen Tragkörper 14, wie z. B. eine Metallhülse, aufgebracht. Der hohlzylindrische Tragkörper 14 ist an einer inneren Oberfläche 20 einer Ausnehmung 19 mit einer groben Oberflächenstruktur, z. B. einer Riffelung, Rasterung oder Zahnung, oder mit einer großen Oberflächenrauhigkeit - bzw. Oberflächenporosität - versehen, so daß durch ein Ineinandergreifen der inneren Oberfläche 20 des Tragkörpers 14 und der äußeren Oberfläche des Sägeseils 1 ein fester Halt der Sägeperle 4 auf dem Sägeseil 1 sichergestellt ist.

Figur 6 Zeigt ein Sägeseil 1 mit kreiszylindrischen Sägeperlen unterschiedlichen Durchmessers, wobei sich jeweils eine Sägeperle 9, 10 mit größerem Durchmesser, d. h. größerem Außenumfang, und eine Sägeperle 11, 12 mit kleinerem Durchmesser, d. h. kleinerem Außenumfang, abwechseln. Bei dem dargestellten Ausführungsbeispiel mit Sägeperlen von zwei verschiedenen Außenumfängen kann die Laufrichtung des Sägeseils 1 frei gewählt werden. Es ist jedoch auch möglich, zwischen den Sägeperlen 10 und 12 sowie 9 und 11 mit jeweils unterschiedlichen Durchmessern eine oder mehrere sägeperlen mit zwischen den Durchmessern der Sägeperlen 9, 10 und 11, 12 liegenden Durchmessern anzuordnen, wobei dann die vorgesehene Laufrichtung des Sägeseils 1 die eingezeichnete Laufrichtung L ist. So erbringen zu Beginn der Einsatzzeit des Sägeseils 1 zuerst die Sägeperlen mit dem größten Durchmesser die Schneidleistung und mit dem Abnutzen dieser Sägeperlen treten Sägeperlen mit jeweils kleinerem Durchmesser hinzu. Es ist daher günstig, wenn der Durchmesser der Sägeperlen innerhalb einer Periode, die von einer Sägeperle mit größtem Durchmesser bis zu einer Sägeperle mit kleinstem Durchmesser reicht, der Durchmesser der Sägeperlen entgegen der Laufrichtung des Sägeseils abnimmt.

In Figur 7 ist eine Kurve II der Schnittleistung (tatsächliche Schnittleistung Sᵢₛₜ bezogen auf die maximale Schnittleistung Sₘₐₓ) eines Sägeseils mit herkömmlichen Sägeperlen im Vergleich zu einer Kurve I der entsprechenden Schnittleistung eines Sägeseils mit Sägeperlen mit Bereichen unterschiedlichen Außenumfangs jeweils über der Zeit dargestellt. Es ist zu erkennen, daß die Kurve II ihr der maximalen Schnittleistung entsprechendes Maximum (100 %) erst am dritten Einsatztag erreicht, wobei während des ersten Einsatztages die Schnittleistung von lediglich 30 % bis ca. 70 % ansteigt. Hingegen erreicht die Kurve I nahezu ihr Maximum bereits am ersten Einsatztag, wobei unmittelbar nach Einsatzbeginn bereits über 90 % der Schnittleistung zur Verfügung stehen.

### Bezugszeichenliste

- 1: - Sägeseil
- 2: - Bindemittel
- 3: - Hartkörper
- 4: - Sägeperle
- 5, 6: - Bereich größeren Außenumfangs
- 7, 8: - Bereich kleineren Außenumfangs
- 9,10: - Sägeperle größeren Außenumfangs
- 11,12: - Sägeperle kleineren Außenumfangs
- 13: - Überzug
- 14: - Tragkörper
- 15: - Stufe
- 16: - Schrägung
- 17: - Rundung
- 18: - Konus
- 19: - Ausnehmung
- 20: - Oberfläche
- 21: - Oberfläche
- 22: - Zwischenraum
- L: - Laufrichtung

## Patentansprüche

1. Sägeseil, insbesondere für eine Seilsäge, mit mindestens einer, in ein festes Bindemittel eingebundene Hartkörper aufweisende Sägeperle mit einer in etwa zylindrischen äußeren Form,
dadurch gekennzeichnet, daß die Sägeperle (4) einen Bereich (5) eines größeren Außenumfangs und einen Bereich (7) eines kleineren Außenumfangs aufweist.

2. Sägeseil nach Anspruch 1, dadurch gekennzeichnet, daß der Bereich (5) eines größeren Außenumfangs der Sägeperle (4) in einer vorgesehenen Laufrichtung (L) des Sägeseils (1) vor dem Bereich (7) eines kleineren Außenumfangs angeordnet ist.

3. Sägeseil nach Anspruch 1 oder 2, dadurch gekennzeichnet, daß der Bereich (5) eines größeren Außenumfangs der Sägeperle (4) in der Laufrichtung (L) des Sägeseils (1) eine geringere Erstreckung aufweist als der Bereich (7) eines kleineren Außenumfangs.

4. Sägeseil nach einem der vorhergehenden Ansprüche, dadurch gekennzeichnet, daß der Bereich (7) eines kleineren Außenumfangs der Sägeperle (4) mit einer Stufe (15) in den Bereich (5) eines größeren Außenumfangs übergeht.

5. Sägeseil nach Anspruch 4, dadurch gekennzeichnet, daß die Stufe (15) eine Schrägung (16) oder eine Rundung (17) aufweist.

6. Sägeseil nach einem der Ansprüche 1 bis 3, dadurch gekennzeichnet, daß der Bereich (7) eines kleineren Außenumfangs der Sägeperle (4) einen Konus (18) bildend kontinuierlich in den Bereich (5) eines größeren Außenumfangs übergeht.

7. Sägeseil nach einem der Ansprüche 2 bis 6, dadurch gekennzeichnet, daß die Sägeperle (4) in der vorgesehenen Laufrichtung (L) hinter dem Bereich (7) eines kleineren Außenumfangs einen weiteren Bereich (6) eines größeren Außenumfangs aufweist.

8. Sägeseil nach Anspruch 7, dadurch gekennzeichnet, daß sich an den weiteren Bereich (6) eines größeren Außenumfangs ein weiterer Bereich (8) eines kleineren Außenumfangs anschließt.

9. Sägeseil nach dem Oberbegriff des Anspruchs 1, dadurch gekennzeichnet, daß das Sägeseil (1) mindestens zwei Sägeperlen unterschiedlichen Außenumfangs aufweist und daß auf dem Sägeseil (1) periodisch abwechselnd Sägeperlen größeren (9, 10) und kleineren (11, 12) Außenumfangs angeordnet sind, wobei in einer vorgesehenen Laufrichtung (L) des Sägeseils (1) innerhalb einer Periode jeweils eine Sägeperle (9, 10) eines größeren Außenumfangs vor einer Sägeperle (11, 12) eines kleineren Außenumfangs angeordnet ist.

10. Sägeseil nach einem der vorhergehenden Ansprüche, dadurch gekennzeichnet, daß die Sägeperlen (4; 9 - 12) kreiszylindrisch sind.

11. Sägeseil nach einem der vorhergehenden Ansprüche, dadurch gekennzeichnet, daß die Sägeperlen (4; 9 - 12) unmittelbar auf das Sägeseil (1) aufgebracht sind.

12. Sägeseil nach einem der Ansprüche 1 bis 10, dadurch gekennzeichnet, daß zwischen den Sägeperlen (4; 9 - 12) und dem Sägeseil (1) jeweils ein eine zentrische Ausnehmung (19) aufweisender Tragkörper (14) angeordnet ist.

13. Sägeseil nach Anspruch 12, dadurch gekennzeichnet, daß die Ausnehmung (19) an ihrer Oberfläche (20) eine Riffelung, Rasterung oder Zahnung aufweist.

14. Sägeseil nach einem der vorhergehenden Ansprüche, dadurch gekennzeichnet, daß das Sägeseil (1) und/oder die Sägeperlen (4; 9 - 12) mit einem Überzug (13) versehen sind.

15. Sägeseil nach Anspruch 14 und einem der Ansprüche 12 oder 13, dadurch gekennzeichnet, daß zumindest ein Teil des Überzugs (13) zwischen Tragkörper (14) und Sägeseil (1) angeordnet ist.

16. Sägeseil nach Anspruch 14 oder 15, dadurch gekennzeichnet, daß der Überzug (13) einen Kunststoff aufweist.

17. Sägeseil nach einem der vorhergehenden Ansprüche, dadurch gekennzeichnet, daß das Bindemittel (2) der Sägeperlen (4; 9 - 12) metallisch ist.

18. Sägeseil nach einem der vorhergehenden Ansprüche, dadurch gekennzeichnet, daß die Hartkörper (3) der Sägeperlen (4; 9 - 12) Diamantkörner sind.

19. Sägeseil nach einem der vorhergehenden Ansprüche, dadurch gekennzeichnet, daß das Sägeseil (1) ein Stahlseil ist.
